# EUROPEAN PATENT SPECIFICATION

(11) **EP 2 581 332 B1**
(45) Date of publication and mention of the grant of the patent: **02.12.2015**
(21) Application number: 11184862.8
(22) Date of filing: 12.10.2011
(51) Int. Cl.: B65G 57/18

(54) **Procedure and mobile device for stacking wooden logs onto a pallet with raised sides**
Verfahren und mobile Vorrichtung zum Stapeln von Rundhölzern auf einer Palette mit angehobenen Seiten.
Procédé et dispositif mobile pour empiler des bûches de bois sur une palette aux côtés relevés

(43) Date of publication of application: 17.04.2013
(73) Proprietor: Winkl, Peter, 9143 St. Michael ob Bleiburg (AT); Siegel, Rudolf, 9563 Gnesau (AT)
(72) Inventor: Winkl, Peter, 9143 St. Michael ob Bleiburg (AT); Siegel, Rudolf, 9563 Gnesau (AT)
(74) Representative: Djukic, Dusan

(56) References cited:
- EP-A2- 2 314 530
- CA-A1- 2 315 046
- US-A- 4 364 311

## Description

### Field of invention

Subject invention relates to a mobile device for automatic stacking of split pieces of wood or logs on a pallet with sides.

### Background of the invention and state of the art

The preparation of logs is a tiresome and time-consuming task, both from the aspect of time spent for the manual preparation of logs, as well as from the aspect of transport of tree trunks or pieces of trunks to the site, where trunks are processed into firewood. The so-called firewood processors, combining the saw and the log splitter, enable processing of whole tree trunks with a usual length into firewood within one working procedure. In these machines a tree trunk to be processed travels through an in feed conveyor to a machine, where a saw each time cuts a piece of specific length, usually 33 cm. This piece of wood is split with a log splitter, which produces firewood. Logs are generated from the splitter in various sizes but in the same length. With the exception of the invention of the same inventor described in the Austrian patent no. 505224, the solutions known so far end in logs, which are then manually stacked into a pallet.

The currently known solutions for transporting piece goods and the like are described in the patent applications DE 39 06 089 A1, US 3 295 703 A and DE 1 191 296, but they cannot achieve axial alignment or are only appropriate for long pieces, such as planks or battens. Other known solutions are described in patent applications JP 59 124 629 A and US 2004/0221549 A1, which are intended for the transport of piece goods that are equal in size and in surface structure.

Even the technical solution described in the European patent application EP 2 314 530 A2, of the applicant of patent-eligible subject matter, does not solve the direct takeover of logs in an optional way, for example, from the rotary dryer drum, the buffer with integrated transport bottom, the cutting and splitting machine or the belt conveyor with quantity control.

### Technical problem

In relation to the currently known technical solutions the method of log takeover has not been duly developed, and this is rendered even more difficult due to the automatic process.

The technical problem the subject invention deals with is the direct takeover of logs in an optional way, for example from the rotary dryer drum, the buffer with the integrated transport bottom, the cutting and splitting machine or the conveyor belt with the quantity control. The described subject invention fully solves the technical problem, which significantly distinguishes it from the currently known solutions.

### Short description of the invention

The subject invention relates to a device for automatic stacking of logs into pallets with lateral parts or sides, which is movable and enables processing, palletizing, and final packing of full pallets on the site, whereby the above described technical problem of direct takeover of logs is solved by means of vibrators and guiding chutes.

Below the subject invention is described by means of enclosed figures showing:
- Figure 1: Drawing of the machine assembly in ground plan
- Figure 2: Drawing of the machine from the front and back side
- Figure 3: Diagram of the machine assembly, view from both sides
- Figure 4: Diagram of the machine with a zoomed detail

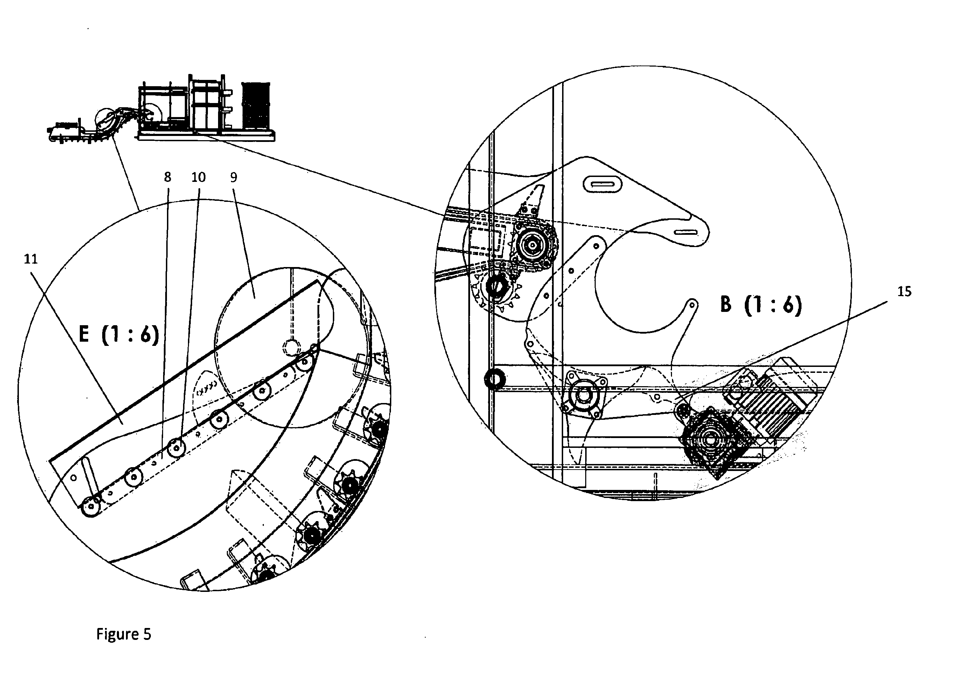

- Figure 5: Details of the machine, positions 8 and 15

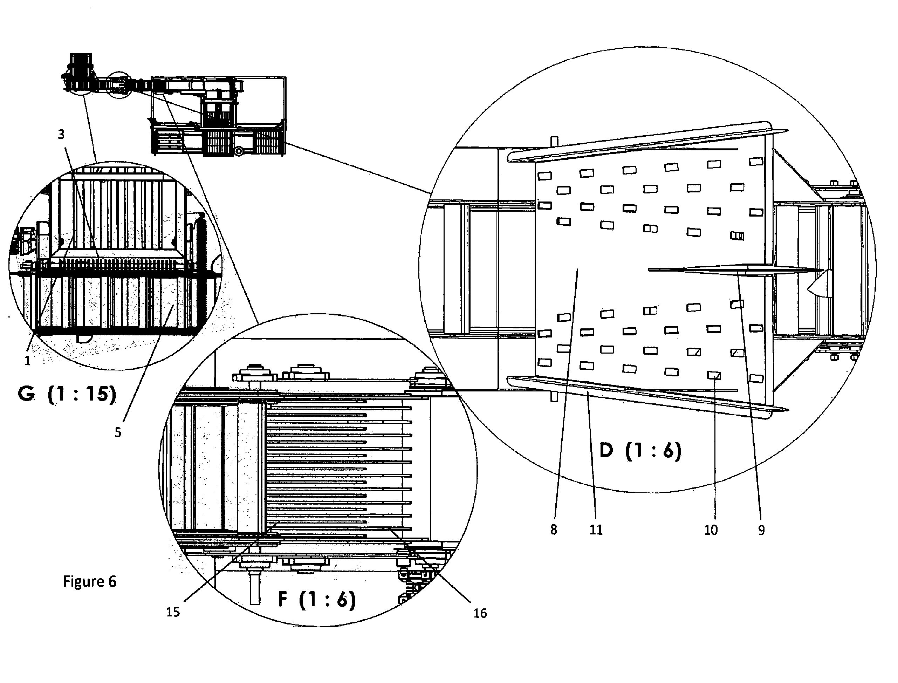

- Figure 6: Details of the machine, positions 1, 3, 5, 15, 16, 8 and 9

### Detailed description of the invention

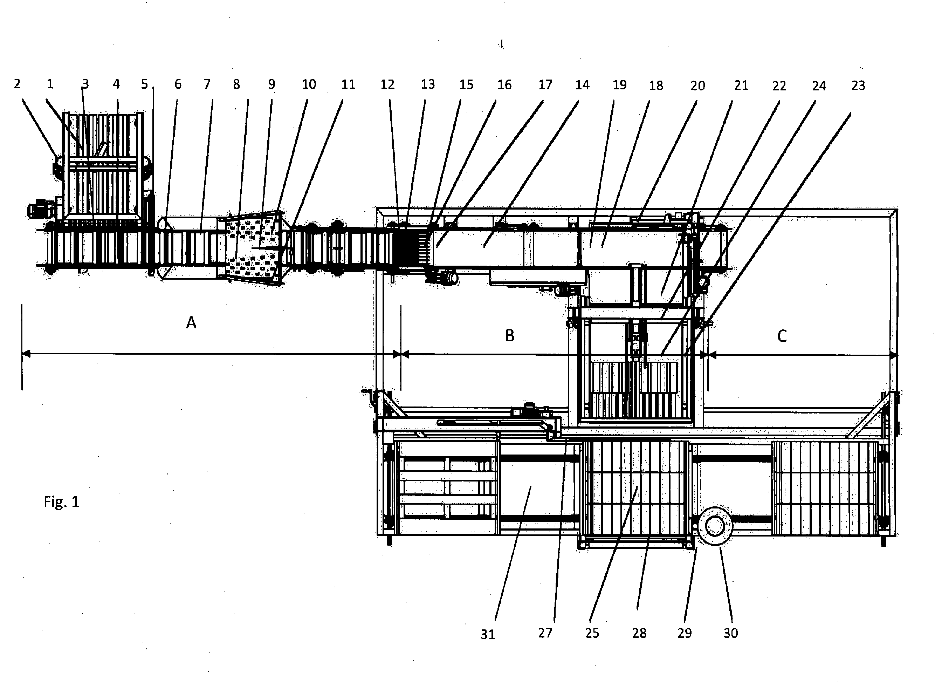

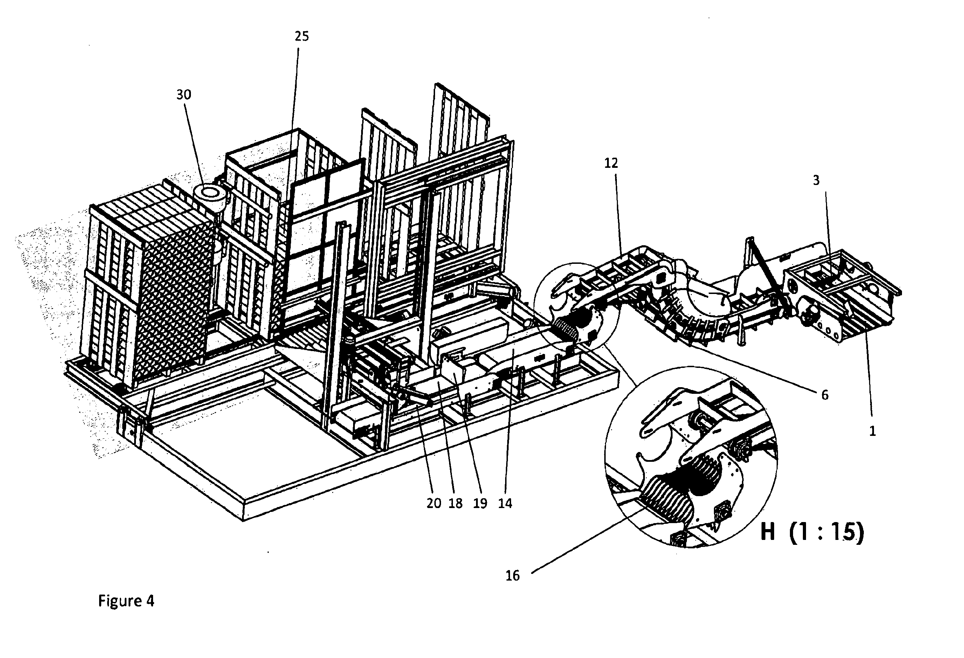

The device in accordance with the subject invention is shown on figures 1, 2, 3 and 4. As can be seen, the device itself is divided to three fields, and namely, the first field A, which is actually the reception and guiding part; its length in the described example is 180cm. The second field B, which actually comprises the pallet to be filled, the transversal transporter of rows of logs 22 and the stacking table 24; its length in the described example is 110 cm. The third field C comprises the automatic device 30 for pallet packing; its length in the described example is 200 cm.

The piece goods or logs which pass from the log cutting and splitting machine (not shown) fall on the axially-aligned vibrating chutes 1, which have openings on the lower sides. On the external side there are installed two vibrators 2, whereby the centrifugal forces effects along the length of the chute. In order to achieve linear movement of logs, the vibrating unit is suspended rigidly, and both external synchronous vibrators are connected to it. Small particles are discarded over the vibrating chutes 1, which have openings on the lower side.

At the end of vibrating chutes 1 there is a transversally positioned acceleration roller 3, which runs in the direction of transport. The acceleration roller has gearwheel installed one on the other. As a result of such "grip-like" surface structure the takeover of logs from the vibrating chute 1 is performed optimally, thus enabling further transport. When we want to transport the device, the entire vibrating unit is folded into the remaining part of the machine and protected for transport purposes.

The acceleration roller 3 catapults logs into individual chambers 4 of the separation belt, which is equipped with transversally-oriented, upright and somewhat forward tilted retention vanes 6. The space between each two consecutive vanes 6 is a chamber 4.

Sides 7, which surround the separation belt 5 in the longitudinal direction, are vertically slightly tilted outward and enable insertion of not yet precisely positioned logs into individual chambers during further transport.

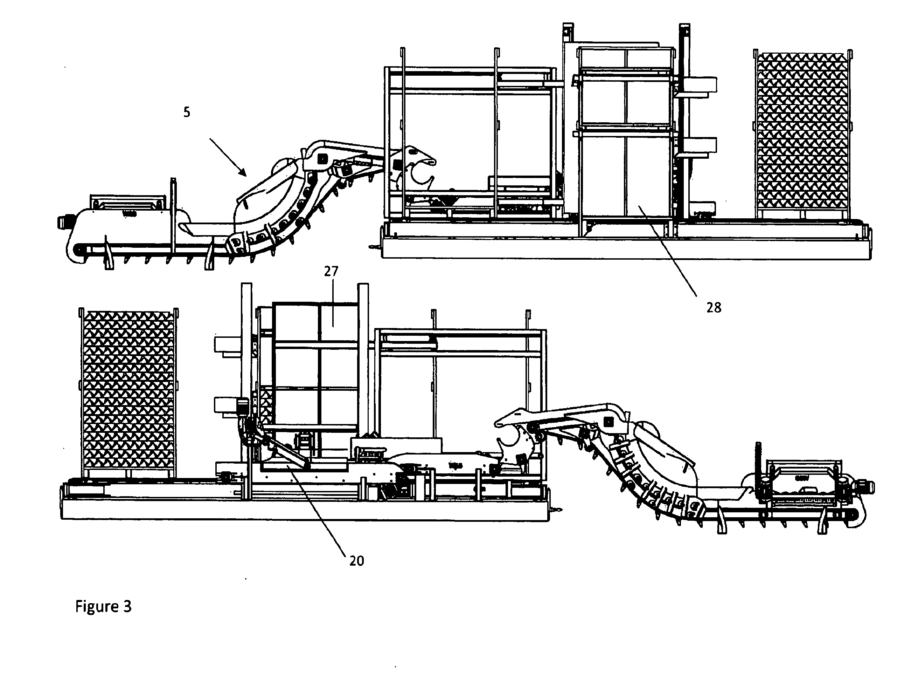

As the entire separation belt 5 travels upwards (Figure 3), only logs precisely positioned in an individual chamber travel forward. Logs that have travelled up to this point in a longitudinal direction in/or surplus logs fall back on the spring-loaded return plate 8, which is equipped with a spring-loaded press wheel 9, integrated rollers 10 and two guides 11.

The press wheel 9 is installed in the central part in the direction of transport. This way, only properly aligned logs remain in this position for this further transport. In the return plate 8 integrated rollers 10 maintain uniform return rate of speed. The task of the guide 11 is to align the logs longitudinally with regard to the direction of the transport during reverse transport, so that the duly aligned logs may re-enter one of the following chambers 4 on the separation belt 5. This is an essential improvement in comparison to the previous model.

In the last part of the separation belt 5 there are alignment bars 12, which are placed parallel on the working surface. Precisely above the separation belt 5 there are alignment brushes 13, which align the logs by slight pressure and by means of alignment bars on the sides.

The delivery of piece goods from the separation belt 5 to the delivery/feed belt 14 is performed by means of the cross wheel 15, which is located below the delivery/feed belt 14 and runs synchronously with the machine cycle.

To prevent logs from striking back the cross wheel 15 and the delivery chute 16 are performed in the following manner: the cross wheel 15, which lies below the delivery chute 16, follows the cycle of the machine and grabs logs with a specific frequency. Flaps from the chain with rollers 17 in the delivery area provide additional security.

The delivery/feed belt 14 transports logs to the positioning conveyor belt 18, which is installed directly behind the delivery/feed belt 14. The positioning conveyor belt 18 is stacked piece by piece.

The takeover sensor, which is located between the delivery/feed belt 14 and the positioning conveyor belt 18 maintains the cycle of the machine.

When a row of logs on the positioning conveyor belt 18 reaches the desired length, the sensor triggers the positioning slider 19, which presses the logs and thus performs the final positioning of logs. After that the takeover of rows 20 pushes a row of logs by the length of logs to the delivery point 21 of the stacking table 24. There, the transversal transporter of rows 22 of the stacking table 24 takes over a row of logs and pushes it onto the stacking table 24, which has two sides 23.

For 33cm long logs the described procedure is performed three times (three types of logs on the pallet). Afterwards a full stacking table 24 on the open side of the stacking pallet lifts up and moves above the pallet, i.e. above its bottom 25 or above each stacked row.

The transversal transporter of rows 22 fixes the logs in place. The stacking table 24 is extracted from the pallet to place the logs on the pallet from a low height. The stacking table 24 and the transversal transporter 22 again move to the starting position. Every stacking height is measured with photocells.

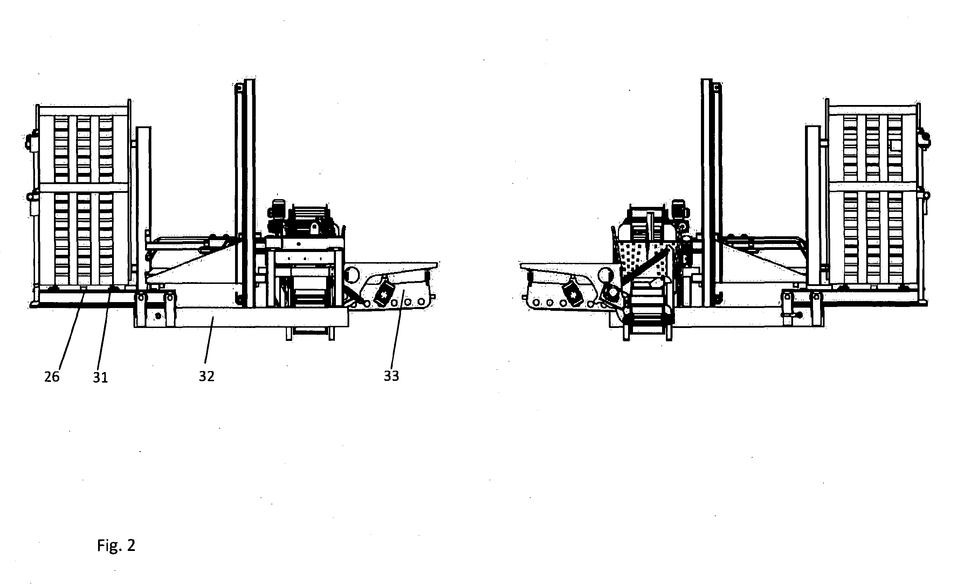

After each stacking as well as at the end of the pallet stacking process the vibrating unit 26 (Figure 2) installed below the pallet ensures optimum compressing of logs on the pallet.

The protective plate 27 of the vibrating unit is movable and automatically moves in front of the open side of the pallet during the vibration process. The other protective plate of the vibrating unit 28 is integrated in the pallet line as the back wall. During the compression process they stabilize rows of logs on both open sides of the pallet.

After compression of logs the upper empty space in the pallet is stacked, if required, and the compression may be repeated again, if necessary.

On the back side of the wall 28 pallet holders 29 stabilize the sides of the pallet, which is not yet fastened securely.

As the figure 1 shows, a fully stacked pallet 25 travels over the chain transporter 31 to the automatic packaging device 30, which fastens the pallet with a packaging strip and stabilizes it.

In the described example the length of logs is 33cm, while the external dimensions of the pallet to be stacked (width x length x height) are 100cm x 120cm x 197.5cm.

All movable parts of the described device are driven pneumatically and/or hydraulically and/or with appropriate electric motors, which are known devices in the technical sphere and are as such not the subject of an invention, so they are not described here in more detail. The source of energy is provided by the diesel electrical aggregate, which may be an independent device or may be installed in the vehicle, which transports the device and also includes the device for air compression or the compressor, as well as the hydraulic aggregate.

In order to transport the mobile device for palletizing purposes, the laterally installed pallet line and the separation belt, including the folding vibrating chutes, can be folded and drawn in.

Such transport measures are in accordance with the usual container measurements, for example the length is 606cm, the width is 243cm and the height is 259cm.

The subject invention is described by means of a concrete execution example. Any variations of the subject invention will immediately be clear to profession experts and are included in the patent application.

## Claims

1. Mobile device for stacking logs into a pallet with sides, installed in a container frame, which is installed on a trailer vehicle and comprises the first field (A) or the reception and guiding part, the second field (B) with a pallet, the device for transversal transfer of logs (22) and the stacking table (24), and the third field (C) with the automatic device 30 for pallet packaging, **characterized in that** the above-mentioned first field (A) comprises axially-oriented vibrating chutes (1) with openings on the lower side, two vibrators (2), positioned on outer sides of said chutes (1), acceleration rollers (3) running in the direction of transport, the separation belt (5) surrounded with two sides (7) and equipped with vanes (6) oriented perpendicularly to the direction of transport of the said separation belt (5), where between two consecutive vanes (6) chambers (4) are formed, the spring-loaded return plate (8), where said spring-loaded return plate (8) is inclined upwards in the direction of transport, and spring-loaded press wheel (9) which is positioned in the central part of the upper end of the spring-loaded return plate (8), embedded rollers (10) and two guides (11), alignment bars (12), vertical alignment brushes (13), delivery/feed belt (14), cross wheel (15) and the delivery chute (16).

2. The device according to claim 1, **characterized in that** said second field (B) comprises flaps from the chain with rollers (17), which provide additional safety, the positioning conveyor belt (18), positioning slider (19), device (20) for taking over of rows of logs, transversal transporter (22) of rows of logs, the stacking table (24) with two sides (23), the vibrating unit (26), protective plates (28, 27) and pallet holders (29).

3. The device according to any preceding claim, **characterized in that** said mentioned second field (B) is connected with said third field (C) by means of chain transporter (31).

4. The procedure of log stacking into a pallet with sides (25) by means of the device according to any preceding claim, **characterized in that** it comprises the following steps:
a) direction of logs on axially-oriented vibrating chutes (1);
b) catapulting of logs by means of the acceleration roller (3) into individual chambers (4), which are located between vanes (6) on the separation belt (5);
c) transport of properly stacked logs on the separation belt (5) and return of surplus and/or unaligned logs back to the return plate (8), which has a press wheel (9), integrated rollers (10) and two side guides (11), from where the returned logs go back to the beginning of the separation belt (5);
d) additional alignment of logs with alignment bars (12) and alignment brushes (13);
e) delivery of piece goods from the separation belt (5) to the delivery/feed belt (14) takes place by means of the cross wheel (15), which is located under the delivery/feed belt (14) and runs synchronously with the machine cycle;
f) stacking of individual rows of logs on the positioning conveyor belt (18) with the positioning slider (19);
g) pushing a compressed row of logs by means of transversal transporter (22) of rows of logs (22) to the stacking table (24), which has two sides (23) until the stacking table (24) is full, which results in a layer of logs;
h) pallet (25) stacking with an individual layer of logs;
i) intermediate compression of logs by means of the vibrating unit (26);
j) return of the stacking table (24) into the starting position and lift of the stacking table (24) to the appropriate height, and the repetition of steps f, g, h and i until the pallet (25) is fully stacked;
k) compression of a fully stacked pallet by means of the vibrating unit (26);
l) if there is enough space in the pallet (25) for one or more rows, again repeat the steps f, g, h, i, j and k (not obligatory).
m) transport of a pallet (25) to the packaging device (30) by means of the chain transporter (31) and pallet packaging.

5. The procedure according to claim 4, **characterized in that**, the integrated rollers (10) in the return plate (8) maintain the constant rate of return speed of returned surplus and/or unaligned logs, and that the side guides (11) during return transports align the logs transversally with regard to the direction of the transport, so that aligned logs may again enter one of the chambers (4) on the separation belt (5).

## Patentansprüche

1. Mobile Vorrichtung zum Stapeln von Rundhölzern auf einer Palette mit angehobenen Seiten, montiert in einem Containerrahmen, der an einem Zugfahrzeug angebracht ist und das erste Feld (A) umfasst bzw. den Empfang- und führenden Teil, das zweite Feld (B) mit Palette, den Querförderer (22) der Rundhölzer und die Füllplatte (24) und das dritte Feld (C) mit automatischer Vorrichtung (30) für die Verpackung von Paletten, **dadurch gekennzeichnet, dass** das erste Feld (A) axiale ausgerichtete Schüttelrinnen (1) enthält, die auf der Unterseite Öffnungen, zwei Vibratoren (2), die auf der Außenseite der erwähnten Schüttelrinnen (1) angebracht sind, besitzen, Beschleunigungswalzen (3), die in Transportrichtung laufen, ein Trennband (5) umgeben von zwei Seiten (7) und mit Schaufeln (6) ausgestattet, die senkrecht zur Transportrichtung des erwähnten Trennbandes (5) ausgerichtet sind, wo sich zwischen zwei aufeinander folgenden Schaufeln (6) Kammern (4) befinden, eine Rückholfederplatte (8), wobei die erwähnte Rückholfederplatte (8) in Transportrichtung geneigt ist und ein Federdruckrad (9), dass sich im mittleren Teil des oberen Endes der Rückholfederplatte (8) befindet, integrierte Rollen (10) und zwei Führungen (11), Ausgleichstangen (12), senkrechte Ausgleichbürsten (13), ein Übergabe- und Füll (14), ein Kreuzrad (15) und eine Füllrinne (16).

2. Vorrichtung nach Anspruch 1, **dadurch gekennzeichnet, dass** das erwähnte zweite Feld (B) Vorhänge aus Ketten mit Walzen (17), die zusätzliche Sicherheit gewährleisten, ein Positionierungsförderband (18), einen Positionierungsschieberegler (19), eine Vorrichtrung für die Übernahme der Rundholzreihen (20), einen Querförderer (22) für die Rundholzreihen, eine Füllplatte (24) mit zwei Seiten (23), eine Schüttelvorrichtung (26), zwei Schutzplatten (27, 28) und einen Palettenhalter (29), enthält.

3. Vorrichtung nach einem der vorangegangenen Ansprüche, **dadurch gekennzeichnet, dass** das erwähnte zweite Feld (B) mit dem dritten Feld (C) mit einem Kettenförderer (31) verbunden ist.

4. Verfahren des Stapelns von Rundhölzern in die Palette mit Seiten (25) mit Hilfe einer Vorrichtung nach einem der vorangegangenen Ansprüche, **dadurch gekennzeichnet, dass** es folgende Schritte umfasst:
a) ausrichtung der Rundhölzer auf den axial ausgerichteten Schüttelrinnen (1);
b) katapultieren der Rundhölzer mittels der Beschleunigungswalzen (3) in die einzelnen Kammern (4), die sich zwischen den Schaufeln (6) auf dem Trennband (5) befinden;
c) transport der ausgerichteten Rundhölzer auf dem Trennband (5) und Rückkehr der überschüssigen und/oder nicht ausgerichteten Rundhölzer auf die Rückholfederplatte (8), die ein Federdruckrad (9), integrierte Rollen (10) sowie zwei Seitenführungen (11), von denen die Rundhölzer zum Anfang des Trennbandes (5) zurückkehren, enthält;
d) zusätzliches Ausgleichen der Rundhölzer mit Ausgleichstäben (12) und Ausgleichbürsten (13);
e) die Übergabe der Stücke vom Trennband (5) auf das Übergabe-/Füllband (14) erfolgt mit Hilfe eine Kreuzrades (15), das sich unter dem Übergabe-/Füllband (14) befindet und synchronisiert mit dem Vorrichtungstakt läuft;
f) Auffüllen des Positionierungsförderbandes (18) mit Positionierungsschiebereglern (19) mit Rundhölzern;
g) Schieben der Rundholzreihen mit Hilfe des Querförderbandes (22) auf die Füllplatte (24), die zwei Seiten (23) besitzt, solange bis die Füllplatte (24) voll ist und wir eine Schicht mit Rundhölzern erhalten;
h) Füllen der Palette (25) mit einzelnen Rundholzschichten;
i) Zwischenverdichten der Rundhölzer mit Hilfe der Schüttelvorrichtung (26);
j) Rückkehr der Füllplatte (24) in die Ausgangsposition zurück und Anheben der Füllplatte (24) auf die geeignete Höhe, wiederholen der Schritte f, g, h und i bis die Palette (25) bis oben aufgefüllt ist;
k) Verdichten der vollen Palette mit Hilfe der Schüttelvorrichtung (26);
l) falls in der Palette (25) Platz für eine oder mehrere Reihen ist, wiederholen Sie die Schritte f, g, h, i, j und k (optional);
m) transport der Palette (25) mittels eines Kettenförderers (31) bis zur Verpackungsvorrichtung (30) und Verpackung der Paletten.

5. Verfahren nach Anspruch 4, **dadurch gekennzeichnet, dass** die Walzen (10), die in die Rückholfederplatte (8) montiert sind, eine konstante Geschwindigkeitsstufe der überschüssigen und/oder nicht ausgerichteten Rundhölzer aufrechterhalten und dass die Seitenführungen (11) während des Rücktransports die Rundhölzer quer zur Transportrichtung ausrichten, so dass die ausgerichteten Rundhölzer erneut in eine der Kammern (4) auf dem Trennband (5) befördert werden können.

## Revendications

1. Dispositif mobile pour empiler des bûches de bois sur une palette aux côtés relevés installé dans le châssis porte-conteneur installé sur le véhicule-tracteur et comprenant le premier champ (A) c.à.d. la partie receptrice et conductrice, le deuxième champ (B) avec la palette, le transporteur transversal (22) des bûches de bois et le plateau de chargement (24) et, le troisième champ (C) avec l'appareil automatique (30) de conditionnement de palettes, **caractérisé par le fait que** le premier champ (A) mentionné contient les rainures orientées axialement vibrantes (1) avec des ouvertures à la partie inférieure, deux vibrateurs (2) situés aux côtés extérieurs des rainures citées (1), les rouleaux d'accélération (3) qui courent dans la direction de transport, le convoyeur de séparation (5) entouré de deux côtés (7) et équipé de lames (6) orientées perpendiculairement dans la direction de transport du convoyeur de séparation cité (5) ayant des chambres (4) formées entre deux lames consécutives (6), le plateau ressort de retour (8), ledit plateau ressort de retour (8) étant incliné dans la direction de transport vers le haut, et la roue ressort de pression (9) qui se trouve dans la partie centrale du bout supérieur du plateau ressort de retour (8), les rouleaux intégrés (10) et deux guides (11), les barres d'équilibrage (12), les brosses d'alignement verticales (13), le convoyeur de remise/chargement (14), la roue en croix (15) et la rainure de chargement.

2. Le dispositif selon la revendication I, **caractérisé par le fait que** le deuxième champ (B) contient les rideaux de chaîne à rouleaux (17) qui assurent la sécurité supplémentaire, le convoyeur de positionnement (18), la glissière de positionnement (19), le dispositif (20) pour la réception des lignes de bûches de bois, l'appareil pour le transporteur transversal (22) des lignes de bûches de bois, le plateau de chargement (24) à deux côtés (23), l'unité vibrante (26), les plaques de protection (27, 28) et les conteneurs palette (29).

3. Le dispositif selon une revendication quelconque précédente **caractérisé par le fait que** le deuxième champ (B) mentionné est lié avec le troisième champ (C) mentionné par l'intermédiaire du transporteur à chaîne (31)

4. Le procédé d'empilage de bûches de bois sur une palette aux côtés relevés (25) à l'aide du dispositif, selon une revendication quelconque précédente **caracterisée par** le fait d'englober les étapes suivantes:
a) canalisation des bûches de bois sur les rainures vibrantes orientées axialement (1);
b) catapulte de bûches de bois à l'aide du rouleau d'accélération (3) dans les chambres individuelles (4) qui se trouvent entre les lames (6) sur le convoyeur de séparation (5);
c) transport de bûches de bois ordonnées sur le convoyeur de séparation (6) et retour de bûches de bois excédentes/non alignées sur le plateau ressort de retour (8) possedant la roue ressort de pression (9), les rouleaux intégrés (10) et deux guides latéraux (11) d'où les bûches de bois renvoyées rentrent au début du convoyeur de séparation (5);
d) alignement supplémentaire des bûches de bois à l'aide des barres d'équilibrage (12) et des brosses d'alignement (13);
e) remise du matériel à la pièce du convoyeur de separation (5) sur la convoyeur de remise/chargement (15) est réalisée à l'aide de la roue en croix (15) se trouvant au-dessous du convoyeur de remise/chargement (14) et marche de manière synchronisée avec la vitesse du dispositif;
f) chargement des lignes individuelles de bûches de bois sur le convoyeur de positionnement (18) avec la glissière de positionnement (19);
g) pousser la ligne de bûches de bois compactée à l'aide du transporteur transversal (22) des lignes de bûches de bois sur le plateau de chargement 24) à deux côtés (23) jusqu'à ce que le plateau de chargement (24) est plein, en obtenant ainsi une couche de bûches de bois;
h) chargement de palette (25) par couche singulière de bûches de bois;
i) compression intermédiaire de bûches de bois à l'aide de l'unité vibrante;
j) retour du plateau de chargement (24) à la position initiale et l'élévation du plateau de chargement (24) à l'hauteur convenable et la répétition des étapes f, g,h et i jusqu'à ce que la palette (25) est remplie;
k) compression de la palette remplie à l'aide de l'unité vibrante (26);
l) si dans la palette (25) il y a encore place disponible pour une ou plusieurs lignes, répétition des étapes f, g, h, i, j et k (non obligatoire);
m) transport de palette (25) à l'aide du transporteur à chaîne (31) jusqu'à l'appareil pour le conditionnement (30) et l'emballage de palette.

5. Procédé selon la revendication 4 est **caractérise par le fait que** les rouleaux (10) integrés dans le plateau ressort de retour (8) maintiennent le niveau stable de vitesse des bûches de bois excédentes et/ou non alignées renvoyées et que, au cours du transport de retour, les guides latéraux (11) alignent les bûches de bois transversalement par rapport à la direction du transport afin que les bûches de bois alignées puissent entrer dans une de chambres (4) sur le convoyeur de séparation (5) de nouveau.
